# FASCICULE DE BREVET EUROPEEN

(11) **EP 2 791 473 B1**
(45) Date de publication et mention de la délivrance du brevet: **06.02.2019**
(21) Numéro de dépôt: 12821289.1
(22) Date de dépôt: 10.12.2012
(51) Int. Cl.: F01D 5/28, D03D 25/00

(54) **STRUCTURE FIBREUSE TISSÉE EN UNE SEULE PIÈCE PAR TISSAGE 3D ET APPLICATION À LA FABRICATION DE PIÈCE EN MATÉRIAU COMPOSITE**
ZU EINEM EINZELTEIL VERWEBTE FASERSTRUKTUR ANHAND VON 3D-WEBEN UND VERWENDUNG BEI DER HERSTELLUNG EINES VERBUNDWERKSTOFFTEILS
FIBER STRUCTURE WOVEN INTO A SINGLE PART BY MEANS OF 3D WEAVING, AND USE IN THE MANUFACTURE OF A COMPOSITE MATERIAL PART

(30) Priorité: 14.12.2011 US 201161570432 P
(43) Date de publication de la demande: 22.10.2014
(73) Titulaire: Safran Aircraft Engines, 75015 Paris (FR)
(72) Inventeur: MARCHAL, Yann, Portsmouth, New Hampshire 03801 (US); COUPE, Dominique, Medford, Massachusetts 02155 (US); FRUSCELLO, Monica, Amesbury, Massachusetts 01913 (US); GOERING, Jonathan, York, Maine 03909 (US)
(74) Mandataire: Boura, Olivier
(86) Numéro de dépôt international: PCT/FR2012/052853
(87) Numéro de publication internationale: WO 2013/088040

(56) Documents cités:
- US-A- 4 922 968
- US-A1- 2010 105 269

## Description

### Arrière-plan de l'invention

L'invention concerne la réalisation de structure fibreuse tissée en une seule pièce par tissage 3D, notamment pour la fabrication de pièce en matériau composite. Un domaine particulier, mais non exclusif d'application de l'invention est la réalisation de structures fibreuses pour des préformes de pièces en matériau composite pour des aéronefs ou des moteurs aéronautiques, notamment des turbomoteurs d'avion.

De façon bien connue, une pièce en matériau composite peut être obtenue par réalisation d'une préforme fibreuse et densification de celle-ci par une matrice. Selon l'application envisagée, la préforme peut être en fibres de verre, carbone ou céramique et la matrice peut être en un matériau organique (polymère), en carbone ou en céramique.

Pour des pièces de forme relativement complexe, il est connu de réaliser une structure fibreuse ou ébauche en une seule pièce par tissage tridimensionnel (3D) ou multi-couches et de mettre en forme cette ébauche pour obtenir une préforme fibreuse ayant une forme voisine de celle d'une pièce à fabriquer.

Afin de faciliter cette mise en forme et pour éviter de pratiquer des incisions se traduisant par la coupe de fils et un amoindrissement de tenue mécanique, il est connu de ménager une ou plusieurs déliaisons au sein de la structure fibreuse lors de son tissage. De telles déliaisons sont obtenues en omettant localement de lier entre elles des couches de fils adjacentes et permettent un dépliage des parties de structure fibreuse adjacentes aux déliaisons.

La réalisation de pièces en matériau composite de forme complexe à partir de structures tissées avec déliaisons est décrite notamment dans les documents WO 2010/061139, WO 2010/103213.

Toutefois, la mise en forme d'une structure fibreuse avec dépliage de parties séparées par une déliaison peut entraîner une fragilité au niveau du fond de la déliaison et des contraintes excessives sur des fils sollicités lors de cette mise en forme.

Le document US 4,922,968 décrit une structure fibreuse selon le préambule de la revendication 7.

### Objet et résumé de l'invention

L'invention a pour but de remédier à de tels inconvénients.

Selon un premier aspect de l'invention, ce but est atteint avec une structure fibreuse tissée en une seule pièce par tissage tridimensionnel, la structure fibreuse ayant des surfaces opposées et présentant :
- une première partie comprenant une pluralité de couches de fils de chaîne et formant une première partie de l'épaisseur de la structure fibreuse entre ses surfaces opposées,
- une deuxième partie comprenant une pluralité de couches de fils de chaîne et formant une deuxième partie de l'épaisseur de la structure fibreuse, les fils de chaîne étant disposés en colonnes comprenant chacune des fils de chaîne de la première et de la deuxième partie, et
- un ensemble de fils de trame liant entre elles les couches de fils de chaîne de la première partie et de la deuxième partie tout en ménageant au moins une déliaison séparant la première partie de la deuxième partie sur une partie de la dimension de la structure fibreuse en direction trame à partir d'un bord de la structure fibreuse jusqu'à un fond de déliaison,
- structure fibreuse dans laquelle, dans chaque plan, un ou plusieurs mêmes premiers fils de trame lient entre elles des couches de fils de chaîne de la première partie de la structure fibreuse adjacentes à la déliaison et des couches de fils de chaîne de la deuxième partie de la structure fibreuse au-delà de la déliaison, et
- un ou plusieurs mêmes deuxièmes fils de trame lient entre elles des couches de fils de chaîne de la deuxième partie de la structure fibreuse adjacentes à la déliaison et des couches de fils de chaîne de la première partie de la structure fibreuse au-delà de la déliaison,
- de sorte que des trajets du ou des premiers fils de trame et du ou des deuxièmes fils de trame se croisent dans au moins une zone de transition s'étendant dans la structure fibreuse à partir du fond de la déliaison, et
- la zone de transition s'étend, en direction trame, sur une distance supérieure au pas entre colonnes de chaîne voisines.

Le croisement des fils de trame dans une zone de transition adjacente au fond de la déliaison renforce ce fond et peut se traduire par une moindre sollicitation des fils lors du dépliage d'une partie de structure fibreuse adjacente à la déliaison.

Selon un mode de réalisation, plusieurs premiers fils de trame, de même que plusieurs deuxièmes fils de trame, suivent des trajets similaires entre les extrémités en direction trame de la zone de transition.

Selon un autre mode de réalisation, plusieurs premiers fils de trame, de même que plusieurs deuxièmes fils de trame, suivent des trajets similaires mutuellement décalés en direction trame dans la ou les zones de transition.

Les fils de chaîne de couches externes de fils de chaîne adjacentes à l'une au moins des surfaces opposées de la structure fibreuse peuvent être tissées avec des mêmes fils de trame s'étendant continûment sur toute la dimension de la structure fibreuse en direction trame, ce qui permet de préserver une continuité de fils en surface.

Dans au moins l'une des première et deuxième partie de la structure fibreuse, les fils de chaîne de couches externes de fils de chaîne adjacentes à une des surfaces de la structure fibreuse sont tissés avec des mêmes fils de trame dont les trajets se croisent à un niveau correspondant sensiblement à celui de la zone de transition, ce qui permet, lors du dépliage d'une partie de structure fibreuse adjacente à la déliaison, de limiter la courbure imposée aux fils de trame adjacents à la surface.

Selon un mode de réalisation, la structure fibreuse présente au moins deux déliaisons séparant la première partie de la deuxième partie sur une partie de la dimension de la structure fibreuse en direction trame à partir de bords opposés de la structure fibreuse jusqu'à des fonds de déliaison respectifs, ce qui permet notamment, après mise en forme, d'obtenir une préforme fibreuse à section en forme de π ou de I.

Selon un autre aspect de l'invention, le but visé est atteint avec une structure fibreuse telle que définie ci-avant avec inversion entre chaîne et trame.

Selon encore un autre aspect de l'invention, celle-ci vise un procédé de fabrication d'une pièce en matériau composite, comprenant la réalisation d'une préforme fibreuse par mise en forme d'une structure fibreuse telle que définie plus haut, la mise en forme comportant au moins le dépliage d'une partie de la première ou de la deuxième partie de la structure fibreuse adjacente à une déliaison, et la densification de la préforme par une matrice.

Selon encore un autre aspect de l'invention, celle-ci vise un procédé de fabrication d'une pièce en matériau composite ayant en section sensiblement une forme de π, comprenant la réalisation d'une préforme fibreuse par mise en forme d'une structure fibreuse telle que définie plus haut avec deux déliaisons, la mise en forme comportant le dépliage de parties de la première ou de la deuxième partie de la structure fibreuse adjacentes aux deux déliaisons, et la densification de la préforme par une matrice.

Une telle pièce ayant en section sensiblement une forme de π est par exemple une plate-forme d'aube de soufflante de turbomachine.

Selon encore un autre aspect de l'invention, celle-ci vise un procédé de fabrication d'une pièce en matériau composite ayant en section sensiblement une forme de I, comprenant la réalisation d'une préforme fibreuse par mise en forme d'une structure fibreuse telle que définie plus haut avec deux déliaisons, la mise en forme comportant le dépliage des parties de la première ou de la deuxième partie de la structure fibreuse adjacentes aux deux déliaisons, et la densification de la préforme par une matrice.

Une telle pièce ayant en section sensiblement une forme de I est par exemple une aube directrice de sortie de turbomachine.

Selon encore un autre de ses aspects, l'invention vise une pale d'hélice creuse de moteur aéronautique obtenue par un procédé tel que défini plus haut.

### Brève description des dessins

L'invention sera mieux comprise à la lecture de la description, faite ci-après, à titre indicatif mais non limitatif, en référence aux dessins annexés, sur lesquels :
- la figure 1 est une vue très schématique en coupe d'une structure fibreuse tissée 3D selon un mode de réalisation de l'invention ;
- la figure 2 est une vue très schématique en coupe d'une préforme obtenue par mise en forme de la structure fibreuse de la figure 1 ;
- la figure 3 est une vue schématique d'un plan d'une structure fibreuse tissée 3D selon un mode de réalisation de l'invention ;
- la figure 4 est une vue schématique d'un plan d'une préforme à section en π obtenue par mise en forme de la structure fibreuse de la figure 3 ;
- la figure 5 est une vue très schématique en coupe d'une structure fibreuse tissée 3D selon un mode de réalisation de l'invention ;
- la figure 6 est une vue très schématique en coupe d'une préforme obtenue par mise en forme de la structure fibreuse de la figure 5 ;
- la figure 7 est une vue schématique d'un plan d'une structure fibreuse tissée 3D permettant d'obtenir une préforme à section en π selon un mode de réalisation de l'invention ;
- la figure 8 est une vue très schématique en coupe d'une structure fibreuse tissée 3D selon un mode de réalisation de l'invention ;
- la figure 9 est une vue très schématique en coupe d'une préforme obtenue par mise en forme de la structure fibreuse de la figure 8 ;
- la figure 10 est une vue schématique d'un plan d'une structure fibreuse tissée 3D permettant d'obtenir une préforme à section en π selon un mode de réalisation de l'invention ;
- la figure 11 est une vue très schématique en coupe d'une structure fibreuse tissée 3D selon un mode de réalisation de l'invention ;
- la figure 12 est une vue très schématique en coupe d'une préforme obtenue par mise en forme de la structure fibreuse de la figure 11 ;
- la figure 13 est une vue schématique en perspective d'une plate-forme d'aube de soufflante obtenue par densification d'une préforme à section sensiblement en forme de *π* ;
- la figure 14 est une vue très schématique en coupe d'une structure tissée 3D selon un mode de réalisation de l'invention ;
- la figure 15 est une vue très schématique en coupe d'une préforme à profil en I obtenue par mise en forme de la structure fibreuse de la figure 14 ;
- la figure 16 est une vue schématique en perspective d'une aube directrice de sortie obtenue par densification d'une préforme à profil en I ;
- la figure 17 est une vue schématique en coupe d'une structure tissée 3D selon un mode de réalisation de l'invention ;
- la figure 18 est une vue très schématique en coupe d'une préforme à profil en V obtenue par mise en forme de la structure fibreuse de la figure 17 ; et
- la figure 19 est une vue schématique d'une hélice obtenue par densification d'une préforme à profil en V.

### Description détaillée de modes de réalisation

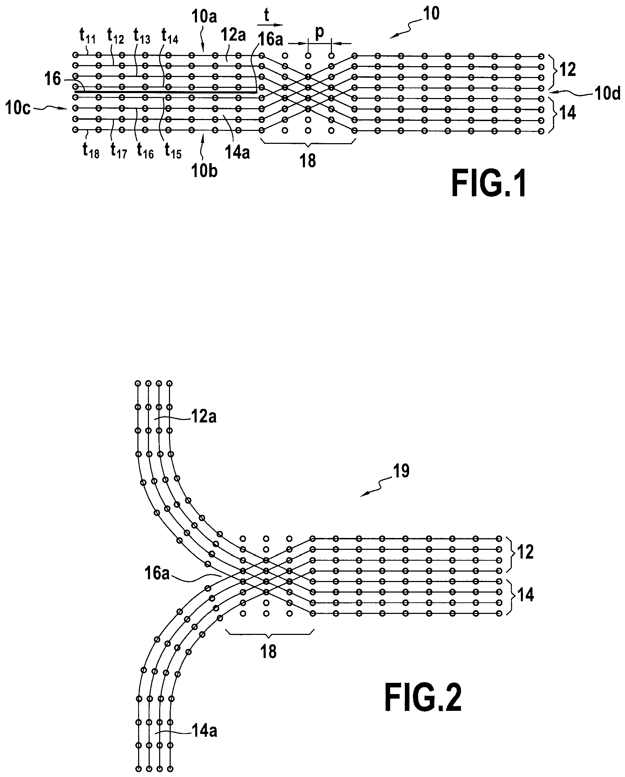

Par souci d'allégement des dessins, sur les figures 1, 2, 3, 4, 5, 7, 8, 10 et 11, les trajets des fils de trame sont représentés rectilignes tandis que les fils de chaîne, en coupe sont représentés par des points. S'agissant de tissage 3D, l'on comprendra que les fils de trame suivent des trajets sinueux afin de se lier entre eux des fils de chaîne appartenant à des couches de fils de chaîne différentes, exception faite de déliaisons, étant noté qu'un tissage 3D, notamment à armure interlock, peut inclure des tissages 2D en surface. Différentes armures de tissage 3D peuvent être utilisées, telles que des armures interlock, multi-satin ou multi-toile, par exemple, comme décrit notamment dans le document WO 2006/136755.

La figure 1 montre très schématiquement un plan de trame d'une structure fibreuse 10 tissée 3D en une seule pièce ayant des faces opposées 10a, 10b. Par plan de trame, on entend ici un plan en coupe perpendiculairement à la direction chaîne montrant une colonne de fils de trame. La structure fibreuse 10 comprend deux parties 12, 14 formant respectivement une première et une deuxième partie de l'épaisseur de la structure fibreuse 10. Chaque partie 12, 14 comprend une pluralité de couches superposées de fils de chaîne, 4 dans l'exemple illustré, le nombre de couches de fils de chaîne pouvant être tout nombre souhaité au moins égal à 2 en fonction de l'épaisseur désirée. En outre, les nombres de couches de fils de chaîne dans les parties 12 et 14 pourront être différents l'un de l'autre. Il est possible aussi d'avoir un nombre de couches de fils de chaîne non constant tout le long de la direction trame. Les fils de chaîne sont disposés en colonnes comprenant chacune des fils de chaîne de la partie 12 et de la partie 14 de la structure fibreuse 10.

Sur une partie de la dimension de la structure fibreuse 10 en direction trame (t), les deux parties 12, 14 de la structure fibreuse sont séparées totalement l'une de l'autre par une déliaison 16 qui s'étend à partir d'un bord 10c de la structure fibreuse 10 jusqu'au fond 16a de la déliaison. Par déliaison, on entend ici une zone qui n'est pas traversée par des fils de trame liant entre eux des fils de chaîne de couches appartenant respectivement aux parties 12 et 14 de la structure fibreuse 10.

Hormis au niveau de la déliaison, les couches de fils de chaîne sont liées entre elles par des fils de trame d'une pluralité de couches de fils de trame.

Dans l'exemple illustré, dans chaque plan de la structure fibreuse 10, des premiers fils de trame t₁₁ à t₁₄ lient des fils de chaîne des couches de fils de chaîne dans la portion 12a de la partie 12 adjacente à la déliaison 16 et des fils de chaîne des couches de fils de chaîne de la partie 14 au-delà de la déliaison 16. A l'inverse, des deuxièmes fils de trame t₁₅ à t₁₈ lient des fils de chaîne des couches de fils de chaîne dans la portion 14a de la partie 14 adjacente à la déliaison 16 et des fils de chaîne des couches de fils de chaîne de la partie 12 au-delà de la déliaison 16. Bien entendu, les parties 12 et 14 de la structure fibreuse 10 au-delà de la déliaison 16 sont liées entre elles.

On pourra par exemple adopter un tissage satin de surface pour les fils de trame t₁₄, t₁₅ dans les portions 12a, 14a séparées par la déliaison 16, le tissage se poursuivant avec une armure interlock au-delà de la déliaison 16.

Ainsi, les trajets des fils t₁₁ à t₁₄ et ceux des fils t₁₅ à t₁₈ se croisent dans une zone de transition 18 qui s'étend à partir du fond 16a de la déliaison 16. Cette zone de transition 18 s'étend, en direction trame, sur une distance égale à plus d'un pas p entre colonnes de fils de chaîne voisines, de préférence au moins égale à 2p. Dans l'exemple illustré, cette distance est égale à 4p. Les fils t₁₁ à t₁₄, de même que les fils t₁₅ à t₁₈ suivent, dans la zone de transition 18, des trajets parallèles similaires entre les extrémités, en direction trame, de la zone de transition 18.

Une préforme fibreuse 19 à profil sensiblement en T (figure 2) est obtenue en dépliant les portions 12a, 14a bordant la déliaison 16. Du fait de la traversée progressive des couches de fils de chaîne par les fils de trame dans la zone de transition 18, les fils de trame sont moins exposés à un risque de détérioration en comparaison avec une traversée plus brusque dans un intervalle entre deux colonnes de fils de chaîne. En outre, le fait d'avoir une zone de transition s'étendant en sens trame sur une longueur relativement grande confère une meilleure capacité de déformation.

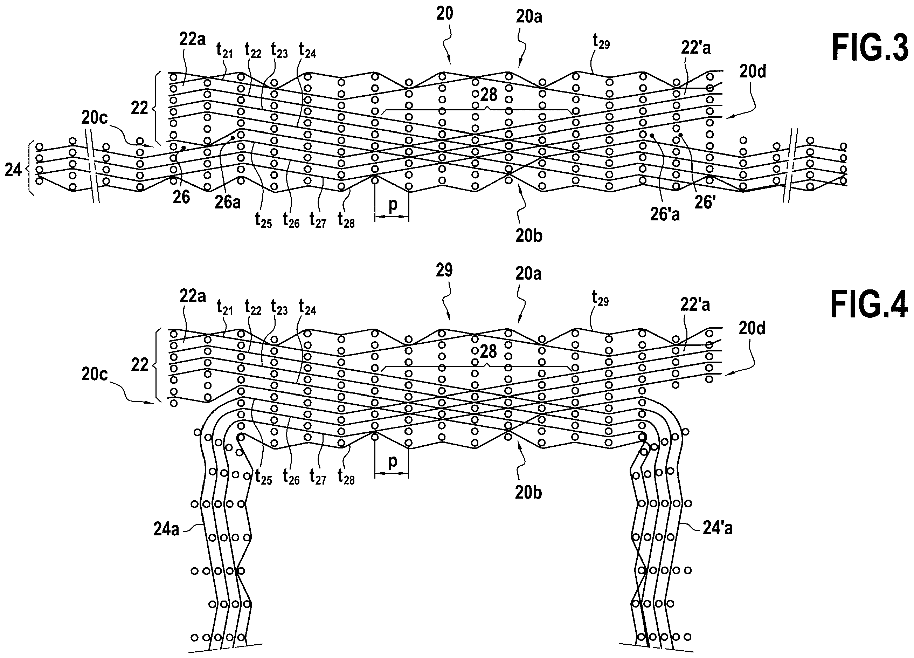

La figure 3 montre un plan d'une structure fibreuse 20 qui comprend une partie de base avec une face externe 20a et une face interne 20b. La structure fibreuse comprend dans son épaisseur deux parties 22, 24 séparées l'une de l'autre, sur une partie de la dimension de la structure fibreuse en direction trame, par des déliaisons 26, 26'. Les déliaisons 26, 26' s'étendent, depuis des bords opposés 20c, 20d de la structure fibreuse 20 jusqu'à des fonds de déliaison respectifs 26a, 26'a, la portion centrale de la structure fibreuse 20 étant sans déliaison.

Chaque partie 22, 24 de la structure fibreuse comporte une pluralité de couches de fils de chaîne, les nombres de couches de fils de chaîne dans les parties 22 et 24 étant ici différents.

Dans chaque plan de la structure fibreuse 20, des mêmes premiers fils de trame t₂₁, t₂₂, t₂₃, t₂₄ lient entre eux des fils de chaîne dans la partie 24 au-delà de la déliaison 26' ainsi que des fils de chaîne dans la portion 22a de la partie 22 bordant la déliaison 26. A l'inverse, des mêmes seconds fils de trame t₂₅, t₂₆, t₂₇, t₂₈ lient entre eux des fils de chaîne dans la portion 22'a de la partie 22 bordant la déliaison 26' et des fils de chaîne dans la partie 24 en deçà de la déliaison 26.

Ainsi, les trajets des fils t₂₁, t₂₂, t₂₃, t₂₄ croisent ceux des fils t₂₅, t₂₆, t₂₇, t₂₈ dans une zone de transition 28 située dans la portion centrale de la structure fibreuse 20, entre les fonds 26a, 26'a des déliaisons 26, 26'. Comme dans le mode de réalisation de la figure 1, les trajets des fils de trame t₂₁, t₂₂, t₂₃, t₂₄ de même que ceux des fils de trame t₂₅, t₂₆, t₂₇, t₂₈ entre les extrémités de la zone de transition 28 sont similaires et la zone de transition 28 s'étend sur une distance, en direction trame, supérieure à p, ici égale à 4 p.

On notera que d'un plan de trame à un autre, l'emplacement de la zone de transition peut être décalé en sens trame pour éviter d'avoir une partie plus chargée en croisements de fils qu'une autre partie, entre les déliaisons 26, 26'.

La mise en forme de la structure fibreuse 20, pour obtenir une préforme fibreuse 29 à section sensiblement en forme de *π* comprend le dépliage des portions de la partie 24 de la structure fibreuse bordant les déliaisons 26, 26' comme montré par la figure 4, pour former en section, les jambes 24a, 24'a du π qui s'étendent à partir de la face interne 20b. On note, dans la portion de la structure fibreuse 20 et de la préforme fibreuse 29 adjacente à la face externe 20a, un tissage avec armure satin de surface (fil t₂₉) assurant une continuité de surface sans traversée de couches de fils de chaîne et sans croisement avec un autre fil de trame.

On notera aussi dans l'exemple illustré que les portions de la partie 24 de la structure fibreuse 20 destinées à former les jambes 24a, 24'a se prolongent au-delà des bords de la partie 22, par ajout de colonnes de fils de chaîne, pour conférer la longueur voulue aux jambes 24a, 24'a.

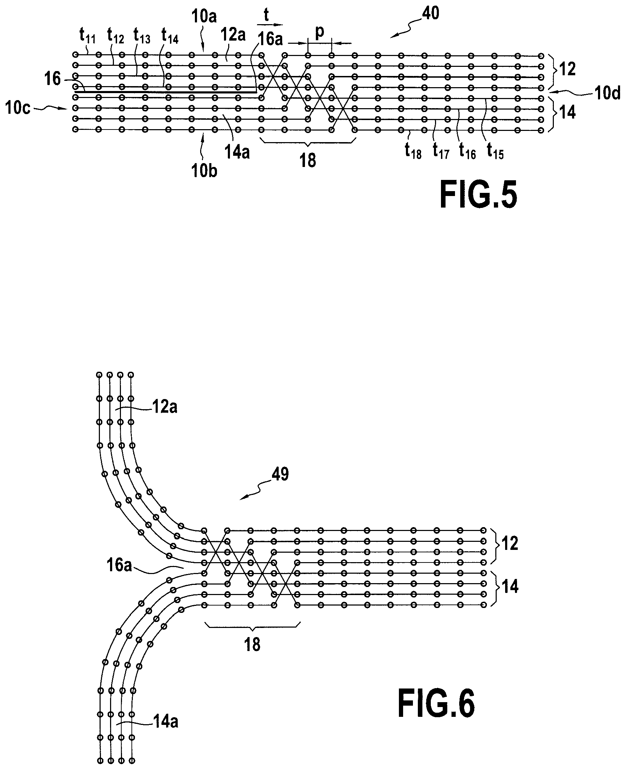

La figure 5 montre très schématiquement une structure fibreuse 40 tissée 3D en une seule pièce selon un deuxième mode de réalisation de l'invention. Les éléments communs entre la structure fibreuse 40 de la figure 5 et la structure fibreuse 10 de la figure 1 portent les mêmes références et ne seront pas à nouveau décrits.

La structure fibreuse 40 se distingue de la structure fibreuse 10 par les modes de traversée de couches de fils de chaîne par les fils de trame qui se croisent dans la zone de transition 18.

Ainsi, la traversée de chacun des fils de trame t₁₁, t₁₂, t₁₃, t₁₄ est effectuée sur une distance en direction trame égale au pas p entre colonnes de fils de chaîne mais les trajets des fils de trame t₁₁ à t₁₄ sont mutuellement décalés en sens trame, le décalage étant dans l'exemple illustré égal au pas p. Il en est de même pour les fils de trame t₁₅, t₁₆, t₁₇ et t₁₈. On a donc une zone de transition 18 qui, comme dans le mode de réalisation précédent, s'étend en direction trame sur une distance supérieure au pas p, en l'espèce sur une distance de 4p. Par rapport au mode de réalisation de la figure 1, une contrainte plus élevée est exercée sur les fils de trame sur leur trajet dans la zone de transition mais la dimension de celle-ci confère une bonne capacité de déformation.

La figure 6 montre une préforme fibreuse 49 à section sensiblement en T obtenue après dépliage des portions 12a et 14a bordant la déliaison 16 des parties 12 et 14 de la structure fibreuse 40.

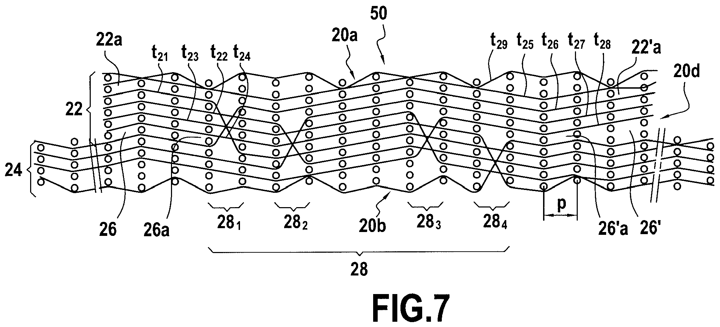

La figure 7 montre un plan d'une structure fibreuse 50 permettant d'obtenir une préforme à section sensiblement en forme de π. Les éléments communs entre la structure fibreuse 50 de la figure 7 et la structure fibreuse 20 de la figure 3 portent les mêmes références et ne seront pas à nouveau décrits.

La structure fibreuse 50 se distingue de la structure fibreuse 20 par les modes de traversée de couches de fils de chaîne par les fils de trame.

Ainsi, la traversée de chacun des fils de trame t₂₁, t₂₂, t₂₃, t₂₄ est effectuée sur une distance en direction trame égale au pas p entre colonnes de fils de chaîne, de même que la traversée de chacun des fils de trame t₂₅, t₂₆, t₂₇, t₂₈. Toutefois les emplacements des traversées des fils t₂₁ à t₂₄, de même que les emplacements des traversées des fils t₂₅ à t₂₈, avec croisements mutuels, sont décalés les uns par rapport aux autres en direction trame. Dans l'exemple de la figure 7, la zone de transition 28 s'étend sur une distance relativement grande entre les fonds 26a et 26'a des déliaisons 26 et 26', en étant formée de plusieurs zones de transition élémentaires 28₁, 28₂, 28₃ et 28₄, les croisements étant ainsi répartis en direction trame dans la portion de structure fibreuse s'étendant entre les déliaisons 26,26'.

Une préforme fibreuse à section sensiblement en forme de *π* est obtenue par dépliage des portions de la partie 24 de structure fibreuse adjacentes aux déliaisons 26, 26', comme dans le cas de la figure 4.

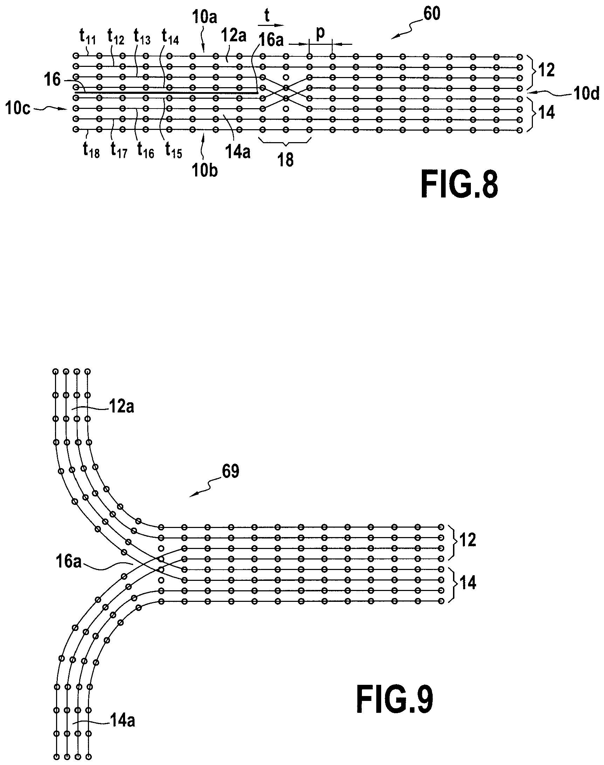

La figure 8 montre très schématiquement une structure fibreuse 60 tissée 3D en une seule pièce selon un troisième mode de réalisation de l'invention. Les éléments communs entre la structure fibreuse 60 de la figure 8 et les structures 10 et 40 des figures 1 et 5 portent les mêmes références et ne seront pas à nouveau décrits.

La structure fibreuse 60 se distingue de la structure fibreuse 10 en ce que, dans chaque plan, seulement une partie des fils de trame est concernée par le processus de traversées de couches de fils de chaîne et de croisements mutuels, ces fils de trame étant ceux qui lient entre eux des fils de chaîne de couches de fils de chaîne dans des portions de la structure fibreuse 60 adjacentes à la déliaison 16, tandis que des fils de trame situés dans des portions de la structure fibreuse adjacentes à ses faces 10a, 10b s'étendent continûment le long de ces surfaces, sans traversées et croisements avec d'autres fils de trame. De cette façon, on peut renforcer la structure fibreuse au niveau du fond de la déliaison, tout en préservant une continuité en surface favorable à un bon état de surface d'une pièce en matériau composite finalement obtenue.

Dans l'exemple illustré, les fils de trame t₁₁, t₁₂, t₁₇ et t₁₈ s'étendent continûment entre les bords 10c et 10d de la structure fibreuse 60, sans croisement avec d'autres fils de trame. Par contre, les fils de trame t₁₃, t₁₄ dans la portion 12a de la partie 12 de la structure fibreuse 60 adjacente à la déliaison 16 traversent des couches de fils de chaîne immédiatement au-delà du fond 16a de la déliaison 16 pour rejoindre la partie 14 de la structure fibreuse 60. A l'inverse, les fils de trame t₁₅, t₁₆ dans la portion 14a de la partie 14 de la structure fibreuse 60 adjacente à la déliaison 16 traversent des couches de fils de chaîne immédiatement au-delà du fond 16a de la déliaison 16, en croisant les fils de trame t₁₃, t₁₄, pour rejoindre la partie 12 de la structure fibreuse 10. Les traversées et croisements de fils de trame se produisent dans une zone de transition 18 ayant, en direction trame, une dimension supérieure au pas p entre colonnes de fils de chaîne, cette dimension étant égale à 2p dans l'exemple. La configuration avec fils de trame s'étendant continûment à proximité des faces 10a, 10b et fils de trame concernés par le processus de traversées et croisements à l'intérieur de la structure fibreuse 60 se retrouve dans chaque plan de la structure fibreuse.

Bien entendu, le nombre de fils de trame situés dans les portions 12a et 14a en étant adjacents à la déliaison et qui sont concernés par le processus de traversées et croisements peut être différent de 2, étant au moins égal à 1. De même, le nombre de fils de trame adjacent aux faces 10a et 10b et s'étendant continûment, sans croisements entre les bords 10c et 10b peut être différent de 2, étant au moins égal à 1.

La figure 9 montre une préforme fibreuse 69 à section sensiblement en T obtenue après dépliage des portions 12a et 14a bordant la déliaison 16 des parties 12 et 14 de la structure fibreuse 60. Les fils de trame t₁₁, t₁₂, t₁₇, t₁₈ non concernés par le processus de traversées et croisements suivent un trajet lissé dans les zones de courbure.

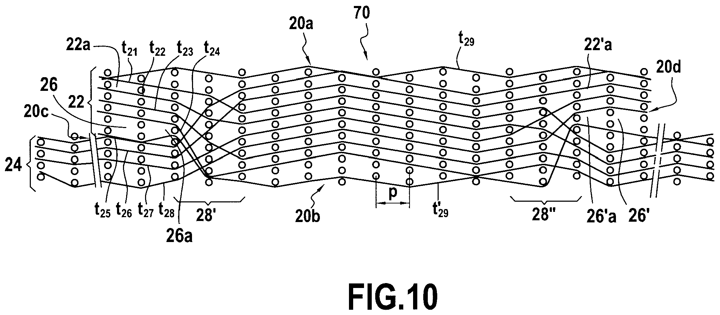

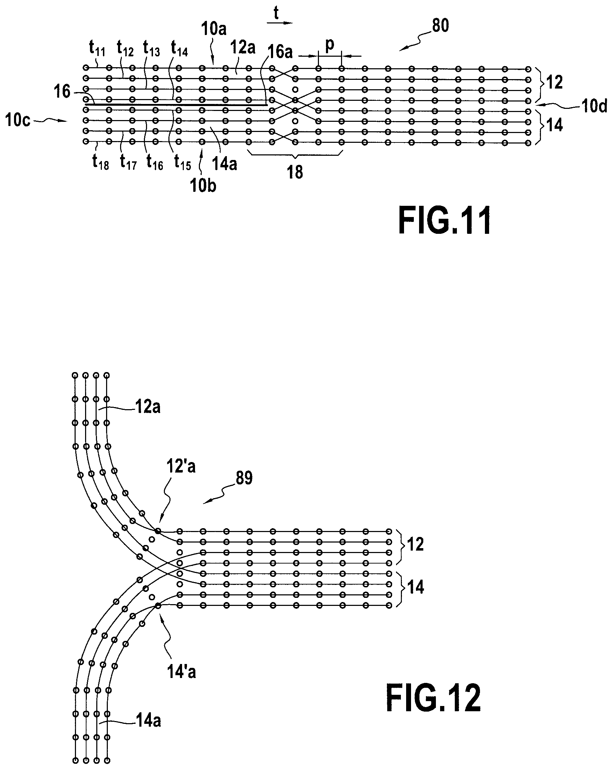

La figure 10 montre un plan d'une structure fibreuse 70 permettant d'obtenir une préforme fibreuse à section sensiblement en forme de π. Les éléments communs entre la structure fibreuse 70 de la figure 11 et les structures fibreuses 20 et 50 des figures 3 et 7 portent les mêmes références et ne seront pas à nouveau décrits.

La structure fibreuse 70 se distingue notamment des structures fibreuses 20 et 50 par la présence d'un fil de trame t'₂₉ qui s'étend continûment le long de la face interne 20b et le long des faces des portions de la partie 24 bordant les déliaisons 26 et 26', assurant ainsi une continuité de la surface de la préforme du coté interne.

En outre, les croisements entre fils de trame se produisent dans deux zones de transition 28' et 28" qui se situent immédiatement à proximité des fonds 26a, 26'a des déliaisons 26, 26'. Chaque zone de transition s'étend en direction trame sur une distance supérieure au pas p entre colonnes de fils de chaîne, en l'espèce sur une distance égale à 2p.

La figure 11 montre schématiquement une structure fibreuse 80 tissée 3D en une seule pièce selon un quatrième mode de réalisation de l'invention. Les éléments communs entre la structure fibreuse 80 de la figure 11 et les structures 10, 40 et 60 des figures 1, 5 et 8 portent les mêmes références et ne seront pas à nouveau décrits.

La structure fibreuse 80 se distingue de la structure fibreuse 60 en ce que, dans chaque plan, les fils de trame qui tissent les fils de chaîne des couches de fils de chaîne les plus proches des faces 10a, 10b, en l'espèce les fils de trame t₁₁ et t₁₂ ainsi que les fils de trame t₁₇ et t₁₈, se croisent sur leurs trajets entre les bords opposés 10c et 10d, sans croiser d'autres fils de trame. Ces croisements se situent sensiblement au niveau du fond de la déliaison 16, c'est-à-dire au niveau des raccordements 12'a et 14'a entre les portions 12a et 14a et le reste de la structure fibreuse 80, lorsque celle-ci est mise en forme, comme le montre la figure 12, pour former une préforme 89 à section sensiblement en T.

Par l'effet de ce croisement, au niveau de ces raccordements 12'a, 14'a, les fils t₁₁, t₁₂, t₁₇ et t₁₈ présentent une courbure moindre, c'est-à-dire suivent un rayon de courbure plus grand, en comparaison avec le mode de réalisation des figures 8 et 9. Les fils t₁₁, t₁₂, t₁₇ et t₁₈ sont ainsi moins sollicités lors de la mise en forme, notamment lorsque l'angle de dépliage de la portion 12a ou de la portion 14a est relativement fort.

Dans les différents modes de réalisation décrits, la structure fibreuse est formée par tissage 3D avec des fils de nature choisie en fonction de l'application envisagée, par exemple des fils de verre, de carbone ou de céramique.

La densification de la préforme fibreuse obtenue après mise en forme de la structure fibreuse est réalisée en formant une matrice également de nature choisie en fonction de l'application envisagée, par exemple une matrice organique obtenue notamment à partir d'une résine précurseur de matrice polymère telle qu'une résine époxyde, bismaléimide ou polyimide, ou une matrice en carbone ou une matrice en céramique. Dans le cas d'une matrice en carbone ou en céramique, la densification pourra être réalisée par infiltration chimique en phase gazeuse ou CVI ("Chemical Vapour Infiltration") ou par imprégnation par une composition liquide contenant une résine précurseur de carbone ou de céramique et traitement thermique de pyrolyse ou céramisation du précurseur, ces procédés étant bien connus en soi.

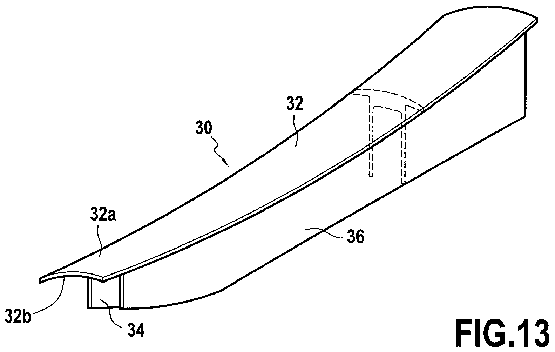

La figure 13 montre très schématiquement une plate-forme 30 de soufflante de turbomachine aéronautique en matériau composite telle qu'elle peut être obtenue par densification d'une préforme fibreuse à section sensiblement en forme de *π* telle que celle de la figure 4 ou telle qu'obtenue à partir des structures fibreuses des figures 7 et 10. Les fibres sont de préférence en carbone et la matrice est de préférence une matrice polymère.

La plate-forme 30 comprend une base 32 ayant une face supérieure 32a et une face inférieure 32b, et deux jambes 34, 36 formant notamment voiles de rigidification et s'étendant à partir de la face inférieure 32b, la plate-forme 30 ayant ainsi une section en forme de *π* comme montré en tirets.

La plate-forme 30 est destinée à être montée dans l'intervalle entre deux aubes de soufflante, au voisinage des pieds de celles-ci, afin de délimiter, du côté intérieur, une veine annulaire d'entrée d'air dans la soufflante, la veine étant délimitée du côté extérieur par un carter de soufflante. L'usinage de la plate-forme 30 à ses dimensions définitives est réalisé après densification de la préforme fibreuse.

Des préformes fibreuses obtenues à partir de structures fibreuses présentant une ou plusieurs déliaisons et conformes à l'invention peuvent être utilisées pour fabriquer d'autres pièces en matériau composite de moteurs aéronautiques.

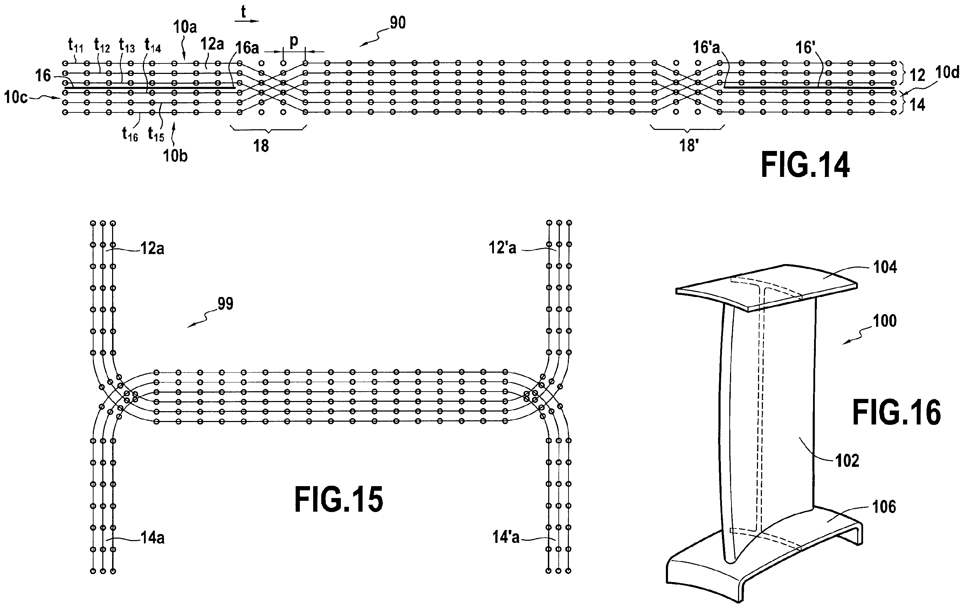

Ainsi, la figure 14 montre très schématiquement un plan de trame d'une structure fibreuse 90 tissée 3D qui se distingue notamment de la structure fibreuse 10 de la figure 1 en ce que les parties 12, 14 sont séparées l'une de l'autre le long de deux déliaisons 16, 16' qui s'étendent à partir de bords opposés 10c, 10d de la structure fibreuse 90 jusqu'à des fonds de déliaison respectifs 16a, 16'a.

Les trajets des fils de trame se croisent dans des zones de transition 18, 18' qui s'étendent à partir des fonds 16a, 16'a des déliaisons 16, 16'. Les zones de transition 18, 18' peuvent être similaires à la zone de transition 18 de la structure fibreuse 10 de la figure 1. En variante, on pourrait adopter des zones de transition analogues à celles des structures fibreuses 40, 60 des figures 5 et 8.

Une préforme fibreuse 99 à section sensiblement en forme de I (ou H) est obtenue (figure 15) en dépliant les portions 12a, 14a des parties 12 et 14 bordant la déliaison 16 et les portions 12'a, 14'a des parties 12 et 14 bordant la déliaison 16'.

La figure 16 montre très schématiquement une aube directrice de sortie 100 en matériau composite, ou OGV (« Outlet Guide Vane ») de turbomachine aéronautique telle qu'elle peut être obtenue par densification d'une préforme fibreuse à section sensiblement en forme de I (ou de H). Les fibres sont de préférence en carbone et la matrice est de préférence une matrice polymère.

L'aube directrice de sortie 100 comprend une pale 102 solidaire à ses extrémités d'une plate-forme extérieure 104 et d'une plate-forme intérieure 106, l'aube 100 étant destinée à être montée dans une veine secondaire d'une turbomachine aéronautique double flux, en aval de la soufflante. L'aube directrice de sortie 100 présente une section de forme sensiblement en I (ou H), comme montré en tirets sur la figure 16.

Pour la fabrication d'une telle aube directrice de sortie 100, on peut utiliser une préforme fibreuse semblable à celle de la figure 15 avec des découpes pratiquées pour reproduire les dimensions développées à plat de la pale et des plates-formes.

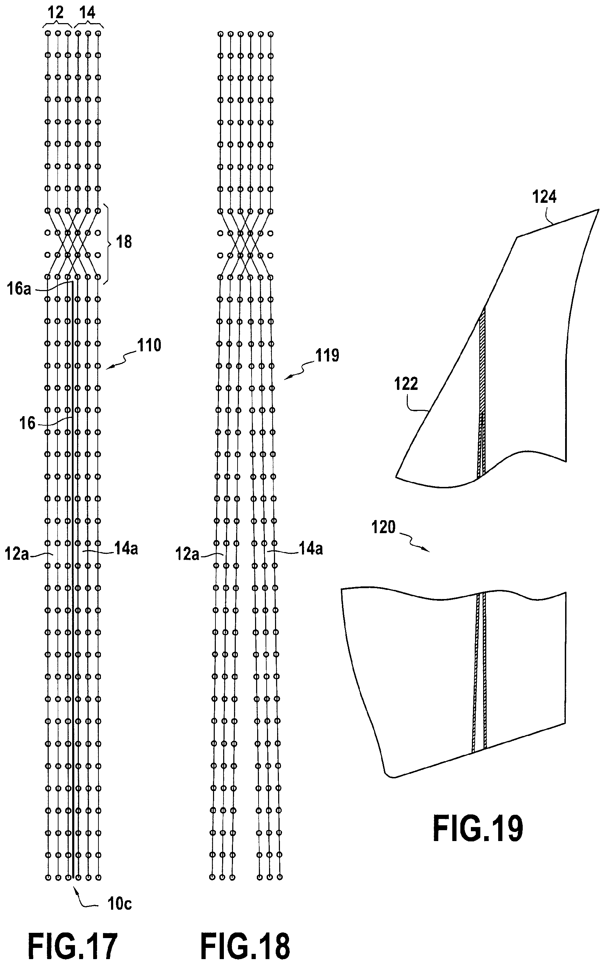

La figure 17 montre très schématiquement un plan de trame d'une structure fibreuse 110 tissée 3D qui se distingue de la structure fibreuse 10 de la figure 1 par le fait que les parties 12, 14 sont séparées l'une de l'autre par une déliaison 16 qui s'étend sur la plus grande partie de la dimension de la structure fibreuse 110 en direction trame, depuis un bord 10c jusqu'au fond de déliaison 16a.

Les trajets de fils de trame se croisent dans une zone de transition 18 qui s'étend à partir du fond 16a de la déliaison 16. La zone de transition 18 de la structure fibreuse 110 peut être semblable à la zone de transition de la structure fibreuse 10 de la figure 1. En variante, on pourrait adopter une zone de transition semblable à celle de la structure fibreuse 40 de la figure 5 ou de la structure fibreuse 60 de la figure 8.

Une préforme fibreuse 119 à section semblablement en forme de V est obtenue (figure 18) en écartant l'une de l'autre les portions 12a, 14a des parties 12, 14 adjacentes à la déliaison 16.

La figure 19 montre très schématiquement et partiellement une pale d'hélice creuse 120 de moteur aéronautique telle qu'elle peut être obtenue par densification d'une préforme fibreuse à section sensiblement en forme de V. Les fibres sont de préférence en carbone et la matrice est de préférence une matrice polymère.

La pale d'hélice 120 présente une partie pleine le long de son bord d'attaque 122 et sommet 124, cette partie pleine se prolonge par une partie creuse conférant un profil à section semblablement en V comme montré sur la figure 19.

La pale d'hélice 120 peut être obtenue par densification d'une préforme dérivée d'une structure fibreuse avec déliaison semblable à celle de la figure 17. Lors du tissage de la structure fibreuse, les emplacements des zones de transition dans des plans successifs sont choisis pour respecter le profil de la pale d'hélice.

Dans les différents modes de réalisation décrits, des fils de trame situés d'un côté d'une déliaison et des fils de trame situés de l'autre côté de la déliaison se croisent dans une partie de la structure fibreuse au-delà du fond de la déliaison en traversant des couches de fils de chaîne et les croisements s'étalent en direction trame dans une zone de transition qui s'étend sur une distance supérieure au pas entre colonnes de fils de chaîne, typiquement sur une distance de plusieurs pas, la zone de transition englobant tous ces croisements pouvant elle-même être formée de plusieurs zones de transition élémentaires. Les fils de trame qui se croisent dans la zone de transition appartiennent de préférence aux portions de la structure fibreuse adjacentes à une déliaison, les fils de trame situés dans une portion de la structure fibreuse adjacente à une surface externe pouvant ne pas être concernés par le processus de traversée de couches de fils de chaîne et croisements.

On notera enfin que, dans les modes de réalisation décrits, la trame et la chaîne pourront être substituées l'une à l'autre.

## Revendications

1. Structure fibreuse (10 ; 20 ; 40 ; 60 ; 80 ; 90 ; 110) tissée en une seule pièce par tissage tridimensionnel, ayant des surfaces opposées (10a, 10b), et dans laquelle :
- une première partie (12) comprend une pluralité de couches de fils de chaîne et forme une première partie de l'épaisseur de la structure fibreuse entre ses surfaces opposées,
- une deuxième partie (14) comprend une pluralité de couches de fils de chaîne et forme une deuxième partie de l'épaisseur de la structure fibreuse, les fils de chaîne étant disposés en colonnes comprenant chacune des fils de chaîne de la première et de la deuxième partie,
- dans chaque plan de la structure fibreuse, un ensemble de fils de trame lient entre elles les couches de fils de chaîne de la première partie et de la deuxième partie tout en ménageant au moins une déliaison (16) séparant la première partie de la deuxième partie sur une partie de la dimension de la structure fibreuse en direction trame à partir d'un bord (10c) de la structure fibreuse jusqu'à un fond (16a) de déliaison,
- un ou plusieurs mêmes premiers fils de trame (t₁₁ à t₁₄) lient entre elles des couches de fils de chaîne de la première partie de la structure fibreuse adjacentes à la déliaison et des couches de fils de chaîne de la deuxième partie de la structure fibreuse au-delà de la déliaison, et
- un ou plusieurs mêmes deuxièmes fils de trame (t₁₅ à t₁₈) lient entre elles des couches de fils de chaîne de la deuxième partie de la structure fibreuse adjacentes à la déliaison et des couches de fils de chaîne de la première partie de la structure fibreuse au-delà de la déliaison,
- de sorte que des trajets du ou des premiers fils de trame et du ou des deuxièmes fils de trame se croisent dans au moins une zone de transition (18) s'étendant dans la structure fibreuse à partir du fond de la déliaison, et
- la zone de transition s'étend, en direction trame, sur une distance supérieure au pas (p) entre colonnes de chaîne voisines.

2. Structure fibreuse selon la revendication 1, dans laquelle plusieurs premiers fils de trame, de même que plusieurs deuxièmes fils de trame, suivent des trajets similaires entre les extrémités en direction trame de la zone de transition.

3. Structure fibreuse selon la revendication 1, dans laquelle plusieurs premiers fils de trame, de même que plusieurs deuxièmes fils de trame, suivent des trajets similaires mutuellement décalés en direction trame dans la ou les zones de transition.

4. Structure fibreuse selon l'une quelconque des revendications 1 à 3, dans laquelle les fils de chaîne de couches externes de fils de chaîne adjacentes à l'une au moins des surfaces opposées de la structure fibreuse sont tissés avec des mêmes fils de trame s'étendant continûment sur toute la dimension de la structure fibreuse en direction trame.

5. Structure fibreuse selon l'une quelconque des revendications 1 à 3, dans laquelle, dans au moins l'une des première et deuxième partie de la structure fibreuse, les fils de chaîne de couches externes de fils de chaîne adjacentes à une des surfaces de la structure fibreuse sont tissés avec des mêmes fils de trame dont les trajets se croisent à un niveau correspondant sensiblement à celui de la zone de transition.

6. Structure fibreuse (20) selon l'une quelconque des revendications 1 à 5, présentant au moins deux déliaisons (26, 26') séparant la première partie (22) de la deuxième partie (24) sur une partie de la dimension de la structure fibreuse en direction trame à partir de bords opposés (20c, 20d) de la structure fibreuse jusqu'à des fonds de déliaison (26a, 26'a) respectifs.

7. Structure fibreuse (10 ; 20 ; 40 ; 60 ; 80 ; 90 ; 110) tissée en une seule pièce par tissage tridimensionnel, ayant des surfaces opposées, et dans laquelle :
- une première partie comprend une pluralité de couches de fils de trame et forme une première partie de l'épaisseur de la structure fibreuse entre ses surfaces opposées,
- une deuxième partie comprend une pluralité de couches de fils de trame et forme une deuxième partie de l'épaisseur de la structure fibreuse, les fils de trame étant disposés en colonnes comprenant chacune des fils de trame de la première et de la deuxième partie,
- un ensemble de fils de chaîne lient entre elles les couches de fils de trame de la première partie et de la deuxième partie tout en ménageant au moins une déliaison séparant la première partie de la deuxième partie sur une partie de la dimension de la structure fibreuse en direction chaîne à partir d'un bord de la structure fibreuse jusqu'à un fond de déliaison,
- un ou plusieurs mêmes premiers fils de chaîne lient entre elles des couches de fils de trame de la première partie de la structure fibreuse adjacentes à la déliaison et des couches de fils de trame de la deuxième partie de la structure fibreuse au-delà de la déliaison, et
- un ou plusieurs mêmes deuxièmes fils de chaîne lient entre elles des couches de fils de trame de la deuxième partie de la structure fibreuse adjacentes à la déliaison et des couches de fils de trame de la première partie de la structure fibreuse au-delà de la déliaison,
- de sorte que des trajets du ou des premiers et deuxièmes fils de chaîne se croisent dans une zone de transition s'étendant dans la structure fibreuse à partir du fond de la déliaison, **caractérisée en ce que**:
- la zone de transition s'étend, en direction chaîne, sur une distance supérieure au pas entre colonnes de trame voisines.

8. Structure fibreuse selon la revendication 7, dans laquelle plusieurs premiers fils de chaîne, de même que plusieurs deuxièmes fils de chaîne, suivent des trajets similaires entre les extrémités en direction chaîne de la zone de transition.

9. Structure fibreuse selon la revendication 7, dans laquelle plusieurs premiers fils de chaîne, de même que plusieurs deuxièmes fils de chaîne, suivent des trajets similaires mutuellement décalés en direction chaîne dans la ou les zones de transition.

10. Structure fibreuse selon l'une quelconque des revendications 7 à 9, dans laquelle les fils de trame de couches externes de fils de trame adjacentes à l'une au moins des surfaces opposées de la structure fibreuse sont tissés avec des mêmes fils de chaîne s'étendant continûment sur toute la dimension de la structure fibreuse en direction chaîne.

11. Structure fibreuse selon l'une quelconque des revendications 7 à 9, dans laquelle , dans au moins l'une des première et deuxième partie de la structure fibreuse, les fils de trame de couches externes de fils de trame adjacentes à une des surfaces de la structure fibreuse sont tissés avec des mêmes fils de chaîne dont les trajets se croisent à un niveau correspondant sensiblement à celui de la zone de transition.

12. Structure fibreuse selon l'une quelconque des revendications 7 à 11, présentant au moins deux déliaisons séparant la première partie de la deuxième partie sur une partie de la dimension de la structure fibreuse en direction chaîne à partir de bords opposés de la structure fibreuse jusqu'à des fonds de déliaison respectifs.

13. Procédé de fabrication d'une pièce en matériau composite comprenant la réalisation d'une préforme fibreuse par mise en forme d'une structure fibreuse selon l'une quelconque des revendications 1 à 12, la mise en forme comportant au moins le dépliage d'une partie de la première ou de la deuxième partie de la structure fibreuse adjacente à une déliaison, et la densification de la préforme par une matrice.

14. Procédé de fabrication d'une pièce (30) en matériau composite ayant en section sensiblement une forme de π, comprenant la réalisation d'une préforme fibreuse par mise en forme d'une structure fibreuse selon l'une quelconque des revendications 6 et 12, la mise en forme comportant le dépliage de parties de la première ou de la deuxième partie de la structure fibreuse adjacentes aux deux déliaisons, et la densification de la préforme par une matrice.

15. Plate-forme (30) d'aube de soufflante de turbomachine en matériau composite obtenue par le procédé de la revendication 14.

16. Procédé de fabrication d'une pièce (100 ; 120) en matériau composite ayant une section sensiblement en frome de I, comprenant la réalisation d'une préforme fibreuse par mise en forme d'une structure fibreuse selon l'une quelconque des revendications 6 et 12, la mise en forme comportant le dépliage des parties de la première et de la deuxième partie de la structure fibreuse adjacentes aux deux déliaisons, et la densification de la préforme par une matrice.

17. Aube directrice de sortie (100) de turbomachine en matériau composite obtenue par le procédé de la revendication 16.

18. Pale d'hélice (120) creuse de moteur aéronautique en matériau composite obtenue par le procédé de la revendication 13.

## Patentansprüche

1. Durch dreidimensionales Weben einstückig gewebte Faserstruktur (10; 20; 40; 60; 80; 90; 110), die gegenüberliegende Oberflächen (10a, 10b) aufweist und bei der:
- ein erster Teil (12) eine Vielzahl von Lagen aus Kettfäden umfasst und einen ersten Teil der Dicke der Faserstruktur zwischen ihren gegenüberliegenden Oberflächen bildet,
- ein zweiter Teil (14) eine Vielzahl von Lagen aus Kettfäden umfasst und einen zweiten Teil der Dicke der Faserstruktur bildet, wobei die Kettfäden in Spalten angeordnet sind, die jeweils Kettfäden des ersten und des zweiten Teils umfassen,
- in jeder Ebene der Faserstruktur eine Anordnung von Schussfäden die Kettfadenlagen des ersten Teils und des zweiten Teils miteinander verbindet und gleichzeitig wenigstens eine Losbindung (16) ausbildet, die den ersten Teil von dem zweiten Teil über einen Teil der Abmessung der Faserstruktur in Schussrichtung, von einem Rand (10c) der Faserstruktur bis zu einem Losbindungsgrund (16a) trennt,
- ein oder mehrere gleiche erste Schussfäden (t₁₁ bis t₁₄) Kettfadenlagen des ersten Teils der Faserstruktur, welche an die Losbindung angrenzen, sowie Kettfadenlagen des zweiten Teils der Faserstruktur jenseits der Losbindung miteinander verbinden, und
- ein oder mehrere gleiche zweite Schussfäden (t₁₅ bis t₁₈) Kettfadenlagen des zweiten Teils der Faserstruktur, welche an die Losbindung angrenzen, sowie Kettfadenlagen des ersten Teils der Faserstruktur jenseits der Losbindung miteinander verbinden,
- so dass sich Wege des ersten Schussfadens oder der ersten Schussfäden und des zweiten Schussfadens oder der zweiten Schussfäden in wenigstens einem Übergangsbereich (18), der sich in der Faserstruktur von dem Grund der Losbindung aus erstreckt, schneiden, und
- der Übergangsbereich in Schussrichtung über eine Strecke verläuft, die größer als der Abstand (p) zwischen benachbarten Kettspalten ist.

2. Faserstruktur nach Anspruch 1, bei der mehrere erste Schussfäden, ebenso wie mehrere zweite Schussfäden, ähnlichen Wegen zwischen den Enden in Schussrichtung des Übergangsbereichs folgen.

3. Faserstruktur nach Anspruch 1, bei der mehrere erste Schussfäden, ebenso wie mehrere zweite Schussfäden, in dem oder den Übergangsbereich(en) ähnlichen, in Schussrichtung gegenseitig versetzten Wegen folgen.

4. Faserstruktur nach einem der Ansprüche 1 bis 3, bei der die Kettfäden von äußeren Kettfadenlagen, die an wenigstens eine der gegenüberliegenden Oberflächen der Faserstruktur angrenzen, mit gleichen Schussfäden verwebt sind, die sich über die gesamte Abmessung der Faserstruktur in Schussrichtung fortlaufend erstrecken.

5. Faserstruktur nach einem der Ansprüche 1 bis 3, bei der in wenigstens einem der ersten und zweiten Teile der Faserstruktur die Kettfäden von äußeren Kettfadenlagen, welche an eine der Oberflächen der Faserstruktur angrenzen, mit gleichen Schussfäden verwebt sind, deren Wege sich in einer Ebene schneiden, welche im Wesentlichen derjenigen des Übergangsbereiches entspricht.

6. Faserstruktur (20) nach einem der Ansprüche 1 bis 5, die wenigstens zwei Losbindungen (26, 26') aufweist, welche den ersten Teil (22) von dem zweiten Teil (24) über einen Teil der Abmessung der Faserstruktur in Schussrichtung, von gegenüberliegenden Rändern (20c, 20d) der Faserstruktur bis zu jeweiligen Losbindungsgründen (26a, 26'a) trennen.

7. Durch dreidimensionales Weben einstückig gewebte Faserstruktur (10; 20; 40; 60; 80; 90; 110), die gegenüberliegende Oberflächen aufweist und bei der:
- ein erster Teil eine Vielzahl von Lagen aus Schussfäden umfasst und einen ersten Teil der Dicke der Faserstruktur zwischen ihren gegenüberliegenden Oberflächen bildet,
- ein zweiter Teil eine Vielzahl von Lagen aus Schussfäden umfasst und einen zweiten Teil der Dicke der Faserstruktur bildet, wobei die Schussfäden in Spalten angeordnet sind, die jeweils Schussfäden des ersten und des zweiten Teils umfassen,
- eine Anordnung von Kettfäden die Schussfadenlagen des ersten Teils und des zweiten Teils miteinander verbindet und gleichzeitig wenigstens eine Losbindung ausbildet, die den ersten Teil von dem zweiten Teil über einen Teil der Abmessung der Faserstruktur in Kettrichtung, von einem Rand der Faserstruktur bis zu einem Losbindungsgrund trennt,
- ein oder mehrere gleiche erste Kettfäden Schussfadenlagen des ersten Teils der Faserstruktur, welche an die Losbindung angrenzen, sowie Schussfadenlagen des zweiten Teils der Faserstruktur jenseits der Losbindung miteinander verbinden, und
- ein oder mehrere gleiche zweite Kettfäden Schussfadenlagen des zweiten Teils der Faserstruktur, welche an die Losbindung angrenzen, sowie Schussfadenlagen des ersten Teils der Faserstruktur jenseits der Losbindung miteinander verbinden,
- so dass sich Wege des ersten Kettfadens oder der ersten und zweiten Kettfäden in einem Übergangsbereich, der sich in der Faserstruktur von dem Grund der Losbindung aus erstreckt, schneiden, **dadurch gekennzeichnet, dass**:
- der Übergangsbereich in Kettrichtung über eine Strecke verläuft, die größer als der Abstand zwischen benachbarten Schussspalten ist.

8. Faserstruktur nach Anspruch 7, bei der mehrere erste Kettfäden, ebenso wie mehrere zweite Kettfäden, ähnlichen Wegen zwischen den Enden in Kettrichtung des Übergangsbereichs folgen.

9. Faserstruktur nach Anspruch 7, bei der mehrere erste Kettfäden, ebenso wie mehrere zweite Kettfäden, in dem oder den Übergangsbereich(en) ähnlichen, in Kettrichtung gegenseitig versetzten Wegen folgen.

10. Faserstruktur nach einem der Ansprüche 7 bis 9, bei der die Schussfäden von äußeren Schussfadenlagen, die an wenigstens eine der gegenüberliegenden Oberflächen der Faserstruktur angrenzen, mit gleichen Kettfäden verwebt sind, die sich über die gesamte Abmessung der Faserstruktur in Kettrichtung fortlaufend erstrecken.

11. Faserstruktur nach einem der Ansprüche 7 bis 9, bei der in wenigstens einem der ersten und zweiten Teile der Faserstruktur die Schussfäden von äußeren Schussfadenlagen, welche an eine der Oberflächen der Faserstruktur angrenzen, mit gleichen Kettfäden verwebt sind, deren Wege sich in einer Ebene schneiden, welche im Wesentlichen derjenigen des Übergangsbereichs entspricht.

12. Faserstruktur nach einem der Ansprüche 7 bis 11, die wenigstens zwei Losbindungen aufweist, welche den ersten Teil von dem zweiten Teil über einen Teil der Abmessung der Faserstruktur in Kettrichtung, von gegenüberliegenden Rändern der Faserstruktur bis zu jeweiligen Losbindungsgründen trennen.

13. Verfahren zur Herstellung eines Teils aus Verbundwerkstoff, umfassend die Ausbildung eines Faservorformlings durch Informbringen einer Faserstruktur nach einem der Ansprüche 1 bis 12, wobei das Informbringen wenigstens das Aufklappen eines Teils des ersten oder des zweiten Teiles der Faserstruktur, welcher zu einer Losbindung benachbart ist, sowie die Verdichtung des Vorformlings durch eine Matrix umfasst.

14. Verfahren zur Herstellung eines Teils (30) aus Verbundwerkstoff, das im Querschnitt im Wesentlichen eine π-Form aufweist, umfassend die Ausbildung eines Faservorformlings durch Informbringen einer Faserstruktur nach einem der Ansprüche 6 und 12, wobei das Informbringen das Aufklappen von Teilen des ersten oder des zweiten Teils der Faserstruktur, welche zu den beiden Losbindungen benachbart sind, sowie die Verdichtung des Vorformlings durch eine Matrix umfasst.

15. Plattform (30) einer Turbomaschinen-Gebläseschaufel aus Verbundwerkstoff, die durch das Verfahren von Anspruch 14 erhalten wird.

16. Verfahren zur Herstellung eines Teils (100; 120) aus Verbundwerkstoff, das einen im Wesentlichen I-förmigen Querschnitt aufweist, umfassend die Ausbildung eines Faservorformlings durch Informbringen einer Faserstruktur nach einem der Ansprüche 6 und 12, wobei das Informbringen das Aufklappen der Teile des ersten und des zweiten Teils der Faserstruktur, welche zu den beiden Losbindungen benachbart sind, sowie die Verdichtung des Vorformlings durch eine Matrix umfasst.

17. Turbomaschinen-Austrittsleitschaufel (100) aus Verbundwerkstoff, die durch das Verfahren von Anspruch 16 erhalten wird.

18. Hohles Propellerblatt (120) eines Flugzeugtriebwerks aus Verbundwerkstoff, das durch das Verfahren von Anspruch 13 erhalten wird.

## Claims

1. A fiber structure woven (10; 20; 40; 60; 80; 90; 110) as a single piece by three-dimensional weaving, the fiber structure having opposite surfaces (10a, 10b) and presenting:
• a first portion (12) having a plurality of layers of warp yarns and forming a first portion of the thickness of the fiber structure between its opposite surfaces;
• a second portion (14) having a plurality of layers of warp yarns and forming a second portion of thickness of the fiber structure, the warp yarns being arranged in columns each of which includes warp yarns of the first portion and of the second portion; and
• in each plane of the fiber structure, a set of weft yarns interlinking the layers of warp yarns of the first portion and of the second portion while leaving at least one non-interlinked zone (16) separating the first and second portions over a portion of the dimension of the fiber structure in the weft direction from an edge (10c) of the fiber structure to an end (16a) of non-interlinked zone, wherein:
• one or more same first weft yarns (t₁₁ to t₁₄) interlink layers of warp yarns of the first portion of the fiber structure adjacent to the non-interlinked zone and layers of warp yarns of the second portion of the fiber structure beyond the non-interlinked zone; and
• one or more same second warp yarns (t₁₅ to t₁₈) interlink layers of weft yarns of the second portion of the fiber structure adjacent to the non-interlinked zone and layers of warp yarns of the first portion of the fiber structure beyond the non-interlinked zone;
• such that the paths of the first weft yarn(s) and of the second weft yarn(s) cross over in at least one transition zone (18) extending in the fiber structure from the end of the non-interlinked zone; and
• the transition zone extends in the weft direction over a distance that is greater than the pitch (p) between adjacent warp columns.

2. A fiber structure according to claim 1, in which a plurality of first weft yarns, as well as a plurality of second weft yarns, follow similar paths between the ends in the weft direction of the transition zone (18; 28).

3. A fiber structure according to claim 1, in which a plurality of first weft yarns, as well as a plurality of second weft yarns, follow similar paths that are mutually offset in the weft direction in the transition zone(s) (18; 28).

4. A fiber structure according to any one of claims 1 to 3, in which the outer layers of warp yarns adjacent to the opposite surfaces of the fiber structure are woven with the same weft yarns extending continuously over the entire dimension of the fiber structure in the weft direction.

5. A fiber structure according to any one of claims 1 to 3, in which, in at least one of the first and second portions of the fiber structure, the warp yarns of the outer layers of warp yarns adjacent to a surface of the fiber structure are woven with the same weft yarns having paths that cross over at a location corresponding substantially to that of the transition zone.

6. A fiber structure (20) according to any one of claims 1 to 5, presenting at least two non-interlinked zones (26, 26') separating the first portion (22) from the second portion (24) over a portion of the dimension of the fiber structure (20) in the weft direction from opposite edges (20c, 20d) of the fiber structure as far as respective ends of non-interlinked zones (26a, 26a').

7. A fiber structure (10; 20; 40; 60; 80; 90; 110) woven as a single piece by three-dimensional weaving, the fiber structure having opposite surfaces and presenting:
• a first portion having a plurality of layers of weft yarns and forming a first portion of the thickness of the fiber structure between its opposite surfaces;
• a second portion having a plurality of layers of weft yarns and forming a second portion of thickness of the fiber structure, the weft yarns being arranged in columns each of which includes weft yarns of the first portion and of the second portion; and
• a set of warp yarns interlinking the layers of weft yarns of the first portion and of the second portion while leaving at least one non-interlinked zone separating the first and second portions over a portion of the dimension of the fiber structure in the warp direction from an edge of the fiber structure to an end of non-interlinked zone, wherein:
• one or more same first warp yarns interlink layers of weft yarns of the first portion of the fiber structure adjacent to the non-interlinked zone and layers of weft yarns of the second portion of the fiber structure beyond the non-interlinked zone; and
• one or more same second weft yarns interlink layers of warp yarns of the second portion of the fiber structure adjacent to the non-interlinked zone and layers of weft yarns of the first portion of the fiber structure beyond the non-interlinked zone;
• such that the paths of the first warp yarn(s) and of the second warp yarn(s) cross over in at least one transition zone extending in the fiber structure from the end of the non-interlinked zone; and
• the transition zone extends in the warp direction over a distance that is greater than the pitch between adjacent weft columns.

8. A fiber structure according to claim 7, in which a plurality of first warp yarns, as well as a plurality of second warp yarns, follow similar paths between the ends in the warp direction of the transition zone.

9. A fiber structure according to claim 7, in which a plurality of first warp yarns, as well as a plurality of second warp yarns, follow similar paths that are mutually offset in the warp direction in the transition zone(s).

10. A fiber structure according to any one of claims 7 to 9, in which the outer layers of weft yarns adjacent to the opposite surfaces of the fiber structure are woven with the same warp yarns extending continuously over the entire dimension of the fiber structure in the warp direction.

11. A fiber structure according to any one of claims 7 to 9, in which, in at least one of the first and second portions of the fiber structure, the weft yarns of the outer layers of weft yarns adjacent to a surface of the fiber structure are woven with the same warp yarns having paths that cross over at a location corresponding substantially to that of the transition zone.

12. A fiber structure according to any one of claims 7 to 11, presenting at least two non-interlinked zones separating the first and second portions over a portion of the dimension of the fiber structure in the warp direction from opposite edges of the fiber structure as far as respective ends of non-interlinked zones.

13. A method of fabricating a composite material part comprising making a fiber preform by shaping a fiber structure according to any one of claims 1 to 12, the shaping including at least folding out a fraction of the first or the second portion of the fiber structure adjacent to a non-interlinked zone, and densifying the preform with a matrix.

14. A method of fabricating a composite material part (30) having a substantially π-shaped section, the method comprising making a fiber preform by shaping a fiber structure according to claim 6 or claim 12, the shaping including folding out fractions of the first or the second portion of the fiber structure adjacent to the two non-interlinked zones, and densifying the preform with a matrix.

15. A turbine engine fan blade platform (30) made of composite material, the platform being obtained by the method of claim 14.

16. A method of fabricating a composite material part (100; 120) of substantially I-shaped section, the method comprising making a fiber preform by shaping a fiber structure according to claim 6 or claim 12, the shaping including folding out fractions of the first and second portions of the fiber structure adjacent to the two non-interlinked zones, and densifying the preform with a matrix.

17. A turbine engine outlet guide vane (100) made of composite material, the vane being obtained by the method of claim 16.

18. A hollow propeller blade (120) for an aeroengine and made of composite material, the blade being obtained by the method of claim 13.
